# EUROPEAN PATENT APPLICATION

(11) **EP 3 591 383 A1**
(43) Date of publication of application: **08.01.2020**
(21) Application number: 19184794.6
(22) Date of filing: 05.07.2019
(51) Int. Cl.: G01N 21/64, G01N 21/84, G01N 35/04, G01N 21/13

(54) **INSTANTANEOUS MULTI-WAVELENGTH FLUORESCENCE DETECTION INSTRUMENT AND DETECTION METHOD THEREOF**

(30) Priority: 06.07.2018 CN 201810738906
(71) Applicant: Guangzhou Labsim Biotech Co., Ltd., Guangzhou, Guangdong 510670 (CN)
(72) Inventor: WANG, Zhicai, Guangzhou, Guangdong 510670 (CN); FU, Wenbo, Guangzhou, Guangdong 510670 (CN); ZHANG, Yili, Guangzhou, Guangdong 510670 (CN)
(74) Representative: Vitina, Maruta

(57) **Abstract**

The present disclosure describes an instantaneous multi-wavelength fluorescence detection instrument and an instantaneous multi-wavelength fluorescence detection method, relating to the field of medical instruments. The instantaneous multi-wavelength fluorescence detection instrument comprises a card holder (20) having an accommodating groove, a driving mechanism (17) configured to drive the card holder (20) to move, and an optical module (60) for fluorescence detection. The optical module (60) generates irradiation light of different wavelength by a light source (71). The irradiation light irradiates the sample to be detected through a first dichroic mirror (81) to generate fluorescence signals of different wavelengths. The fluorescence signals travel on multiple fluorescence transmission paths through second dichroic mirrors (82), some of the fluorescence transmission paths are at a reflection light path of the second dichroic mirrors (82) and some of the fluorescence transmission paths are at a transmission light path of the second dichroic mirrors (82). The fluorescence of different wavelengths is received by a corresponding optical element (93). The present disclosure shows instantaneous multi-wavelength fluorescence detection. Both the efficiency and reliability of detection are improved.

## Description

### TECHNICAL FIELD

The present invention relates to the field of medical instruments, and more particularly to an instantaneous multi-wavelength fluorescence detection instrument and an instantaneous multi-wavelength fluorescence detection method.

### BACKGROUND

Dry fluorescence detection technology has made a great progress recently and is suitable for the rapid medical detection due to the use of a dry fluorescence test card as a carrier and a combination of a test optical path, a barcode reader and a test platform. Moreover, this technology has advantages of high sensitivity, good selectivity, less sample consumption and simple operation, widely applicable to medical detection.

The single-wavelength excitation light irradiation used in conventional dry immunofluorescence assays for a sample to be detected is gradually replaced with multi-wavelength excitation light irradiation. However, the existing multi-wavelength detection is performed by switching the filter set and repeating the detection, which is time-consuming. Besides, the filter set needs to be repeatedly positioned so that the positioning accuracy is affected by the movement mechanism and the reliability is reduced due to the movement. Moreover, the extended time may result in fluorescence decay and degradation of the reagent, which is not conducive to the detection.

### SUMMARY

An object of the present invention is to provide an instantaneous multi-wavelength fluorescence detection instrument and also an instantaneous multi-wavelength fluorescence detection method, which comprises a light source capable of emitting multiple wavelengths to detect samples, so that fluorescence of different wavelengths is excited to form multiple fluorescence transmission paths, and fluorescence signals are received by optical elements.

The technical solutions of the application are described as follows.

The application provides an instantaneous multi-wavelength fluorescence detection instrument, comprising:
a card holder having an accommodating groove;
a driving mechanism configured to drive the card holder to move; and
an optical module for fluorescence detection, the optical module comprising an excitation light source component having at least one excitation light channel, a color filter component configured to form multiple fluorescence transmission paths and a fluorescence receiving component having multiple fluorescence receiving channels, wherein the excitation light source component comprises a first dichroic mirror and a light source configured to generate irradiation light, the first dichroic mirror being arranged at an irradiation light path of the light source, the card holder being movable onto a reflection light path of the first dichroic mirror by the driving mechanism; the color filter component is arranged at a transmission light path of the first dichroic mirror, and the color filter component comprises at least one second dichroic mirror configured to receive fluorescence signals; and the fluorescence receiving component comprises multiple optical elements each arranged at a reflection light path and/or a transmission light path of the second dichroic mirror.

Optionally, the driving mechanism comprises a guide rail component, a slider that can slide along the guide rail component, and a driving motor connected to the slider via a belt drive component; the belt drive component comprises a driving wheel mounted on a driving shaft of the driving motor, a driven wheel arranged in opposite to the driving wheel, and a drive belt closely arranged on the driving wheel and the driven wheel; the slider is fixedly connected to the drive belt; and the card holder is connected to the slider via a slider connecting plate.

Optionally, the card holder comprises a bottom wall, a back wall, a left wall and a right wall; a limiting portion, which protrudes inward, is arranged at each of an upper edge of the left wall and an upper edge of the right wall; a guide portion is arranged on each of the bottom wall, the left wall and the right wall; and, a first elastic member is arranged on an inner side of the left wall and/or an inner side of the right wall, and a second elastic member is arranged on a top end surface of the bottom wall.

Optionally, the instantaneous multi-wavelength fluorescence detection instrument further comprises a card dropping mechanism; the card dropping mechanism comprises a card retaining plate and a card slide plate; a notch is formed on the back wall; the card retaining plate comprises a fixation portion, a connection portion and a card retaining portion matched with the notch; and a cut-through space through which the card holder goes is arranged between the fixation portion and the card retaining portion.

Optionally, the excitation light source component further comprises fourth dichroic mirrors configured to combine irradiation light from the light source; the fourth dichroic mirrors are arranged between the respective light source and the first dichroic mirror; a collimation lens is arranged between the fourth dichroic mirrors and the light source; and the excitation light source component further comprises a first convex lens arranged at a reflection light path of the first dichroic mirror.

Optionally, there are at least two second dichroic mirrors, which are sequentially arranged, with the second dichroic mirror close to the first dichroic mirror being arranged at a transmission light path of the first dichroic mirror and the later second dichroic mirror being arranged at a transmission light path of the previous second dichroic mirror.

Optionally, the fluorescence receiving component further comprises a plurality of second optical filters (91) and second convex lenses (92), which are configured to collect fluorescence signals on a corresponding one of the optical elements; and the plurality of second optical filters (91) and second convex lenses (92) are arranged between the optical elements and a corresponding one of the second dichroic mirrors. The optical elements are photomultiplier tubes.

Optionally, the instantaneous multi-wavelength fluorescence detection instrument further comprises a control system configured to receive a signal from each of the optical elements, the control system being connected with a thermal transfer printer and a display screen.

The application provides an instantaneous multi-wavelength fluorescence detection method, which uses the instantaneous multi-wavelength fluorescence detection instrument as described in any one of claims 1 to 8, comprising steps of:
S1: inserting, into a card holder, a carrier of a sample to be detected, and moving the sample to be detected to a detection position of an optical module by a driving mechanism;
S2: emitting, by a light source, multiple irradiation lights of different wavelengths, which are reflected by a first dichroic mirror to the sample to be detected to excite multiple fluorescence signals of different wavelengths;
S3: reflecting and/or transmitting the fluorescence signals by at least one second dichroic mirror, in order to split the fluorescence signals of different wavelengths; and
S4: receiving the split fluorescence signals by optical elements, respectively.

The present invention has the following beneficial effects. In the present invention, an optical module is designed, a carrier of a sample to be detected is moved to a detection port of the optical module by a card holder, multiple irradiation lights of different wavelengths are generated by the light source and irradiate the sample to be detected through the first dichroic mirror to generate fluorescence signals of different wavelengths, the fluorescence signals for multiple fluorescence transmission paths through second dichroic mirrors, some of the fluorescence transmission paths are at a reflection light path of the second dichroic mirrors and some of the fluorescence transmission paths are at a transmission light path of the second dichroic mirrors, and the fluorescence of different wavelengths is received by a corresponding one of the optical elements. In the present invention, lights of different wavelengths can be emitted to the sample to be detected, to excite fluorescence signals of different wavelengths, to form multiple fluorescence transmission paths. In the present invention, the simultaneous and instantaneous detection of multi-wavelength fluorescence is enabled, and the detection efficiency is thus improved significantly. In addition, by reducing the time for the motion of the carrier of the sample to be detected, the decay of the sample to be detected is decreased, and the reliability of multi-wavelength fluorescence detection is improved. In the present invention, the number and type of light paths for a reagent card item can be automatically determined by scanning the barcode of the reagent card, so the respective light source can be automatically controlled and the respective sensors can be automatically controlled to collect data. The reaction and test of reagent cards both at a single wavelength and at multiple wavelengths can be intelligently combined.

### BRIEF DESCRIPTION OF THE DRAWINGS

To describe the technical solutions in the embodiments of the present invention more clearly, the accompanying drawings to be used in the description of the embodiments will be simply explained below. Apparently, the described drawings show only some, but not all, embodiments of the present invention. Other designs and drawings can be obtained by a person of ordinary skill in the art according to those drawings, without paying any creative effort.
Fig. 1 is a structural diagram of an instantaneous multi-wavelength fluorescence detection instrument;
Fig. 2 is a structural diagram of an instantaneous multi-wavelength fluorescence detection instrument, with the top lid, the thermal transfer printer and the display screen not shown;
Fig. 3 is an assembled view of the driving mechanism according to the present invention;
Fig. 4 is an assembled view of the card holder, the driving mechanism, the optical module and the card dropping mechanism according to the present invention, from a first angle of view;
Fig. 5 is an assembled view of the card holder, the driving mechanism, the optical module, the card dropping mechanism and the scanner according to the present invention, from a second angle of view;
Fig. 6 is a structural diagram of the optical module according to the present invention;
Fig. 7 is a structural diagram of the optical box and the optical module inside the optical box, according to the present invention; and
Fig. 8 is a structural diagram of the card holder according to the present invention.

### DETAILED DESCRIPTION OF EMBODIMENTS

The concepts, specific structure and technical effects of the invention will be clearly and completely described below with reference to the embodiments and the accompanying drawings to make the objects, features and effects of the invention fully understood. Obviously, the described embodiments are merely a part of the embodiments of the invention and are not all of the embodiments. Those skilled in the art may obtain other embodiments based on the embodiments of the invention without paying any creative efforts, which should still fall within the scope of the invention. In addition, the coupling and connection used herein are not intended to merely indicate the direct connection between the members, but are intended to indicate that a coupling accessory can be optionally introduced or removed according to the specific requirement to form a better coupling structure.

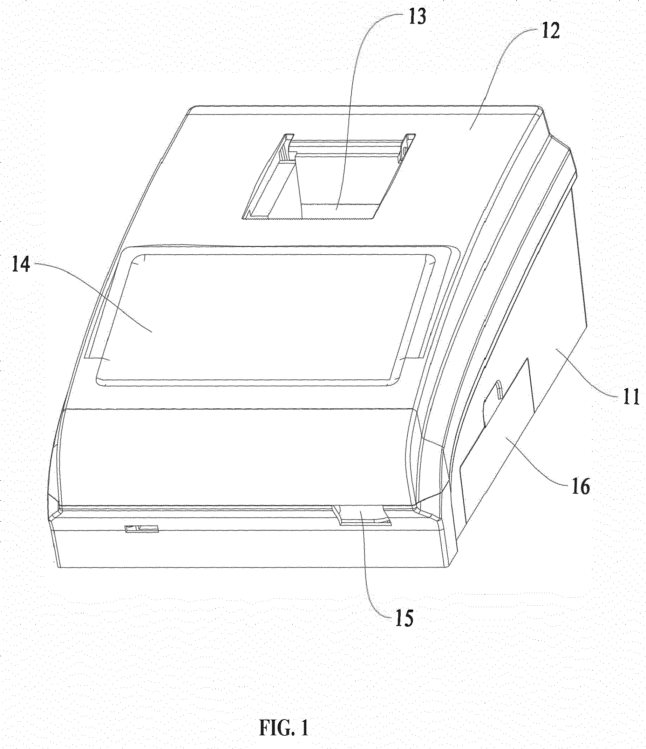

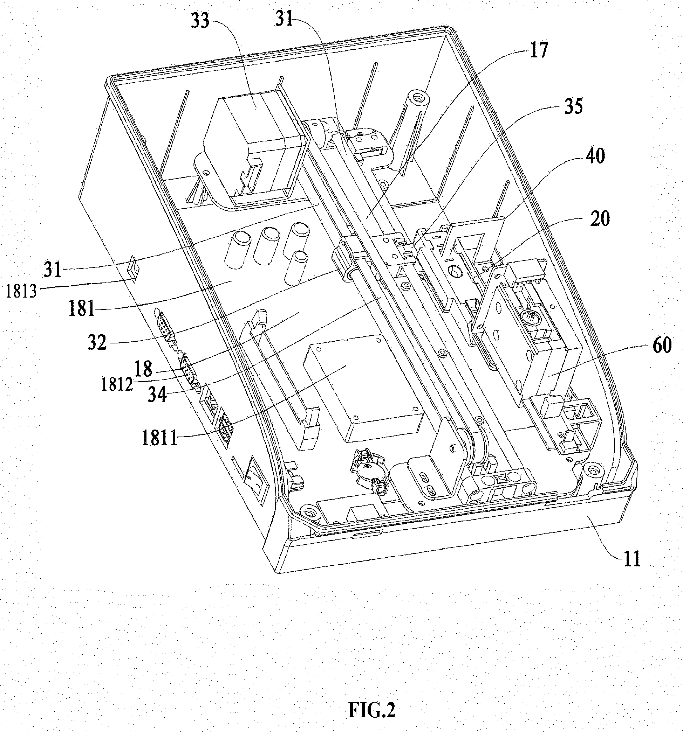

Fig. 1 and Fig. 2 show structural diagrams of the present invention. An instantaneous multi-wavelength fluorescence detection instrument comprises a bottom shell 11, a top shell 12, a card holder 20, a driving mechanism 17, a control system 18 and an optical module 60. The bottom shell 11 and the top shell 12 form, after being assembled together, a mounting space. The control system 18 is connected with a thermal transfer printer 13 and a display screen 14, both of which are arranged on the top shell 12. The control system 18 performs calculation according to signals from the optical module 60, and prints and displays the result of calculation. The control system 18 also controls the motion of the driving mechanism 17. A slot 15 is formed on the bottom shell 11, by which a reagent card 50 can be inserted by an operator. The reagent card 50 is placed in the accommodating groove of the card holder 20. The reagent card 50 serves as a carrier of a sample to be detected. The control system 18 comprises a PCBA 181 on which a processor 1811, a data line connector 1812, a power connector 1813 and a power switch 1814 are arranged. The instantaneous multi-wavelength fluorescence detection instrument further comprises a mounting plate 19 on which the driving mechanism 17 and the optical module 60 are fixed.

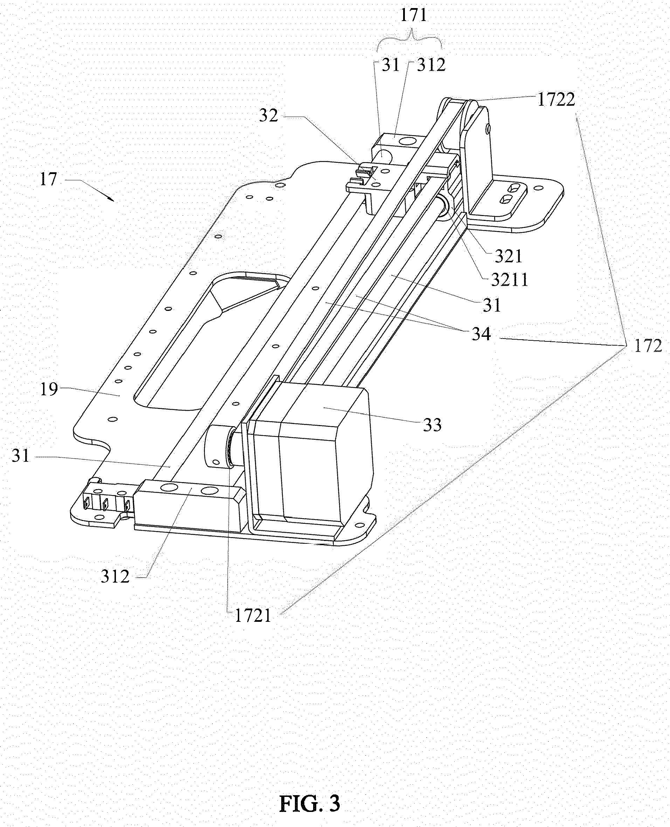

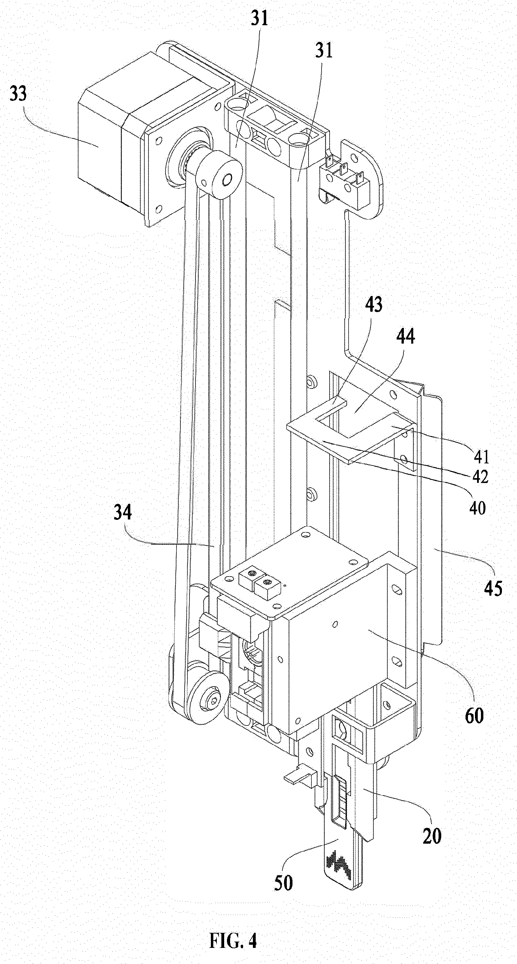

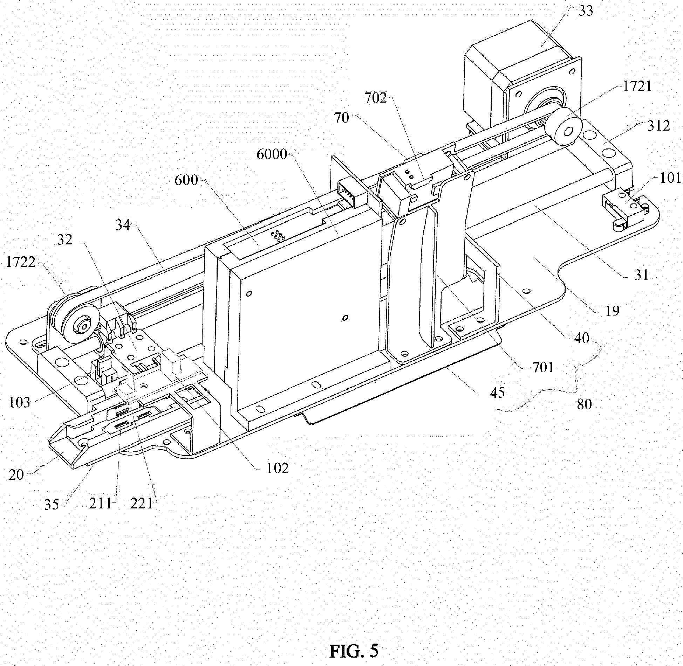

Referring to Figs. 3, 4 and 5, the driving mechanism 17 is configured to drive the card holder 20 to move. Specifically, the driving mechanism 17 comprises a guide rail component 171, a slider 32 that can slide along the guide rail component 171, and a driving motor 33 connected to the slider 32 via a belt drive component 172. The driving motor 33 is fixed at one end of the mounting plate 19. The guide rail component 171 comprises two parallel guide rods 31. A guide rail seat 312 is arranged at each of two ends of the guide rods 31. The slider 32 is provided with a hole 321 through which the guide rods 31 pass. The hole 321 is provided with a self-lubricating copper bush 3211. The belt drive component 172 comprises a driving wheel 1721 mounted on a driving shaft of the driving motor 33, a driven wheel 1722 arranged in opposite to the driving wheel 1721, and a drive belt 34 closely arranged on the driving wheel 1721 and the driven wheel 1722. The slider 32 is fixedly connected to the drive belt 34. The card holder 20 is connected to the slider 32 via a slider connecting plate 35. The driving motor 33 drives the drive belt 34 to run, thus drives the slider 32 to linearly move along the guide rods 31. The card holder 20 connected to the slider 32 can linearly move. The driving motor 33 may be a stepper motor, the forward and reverse rotation of which enables the forward and backward movement of the card holder 20. Terms "front", "rear", "left" and "right", as used here, are used for describing the structure with reference to the drawings, and shall not be regarded as any limitation to the claims.

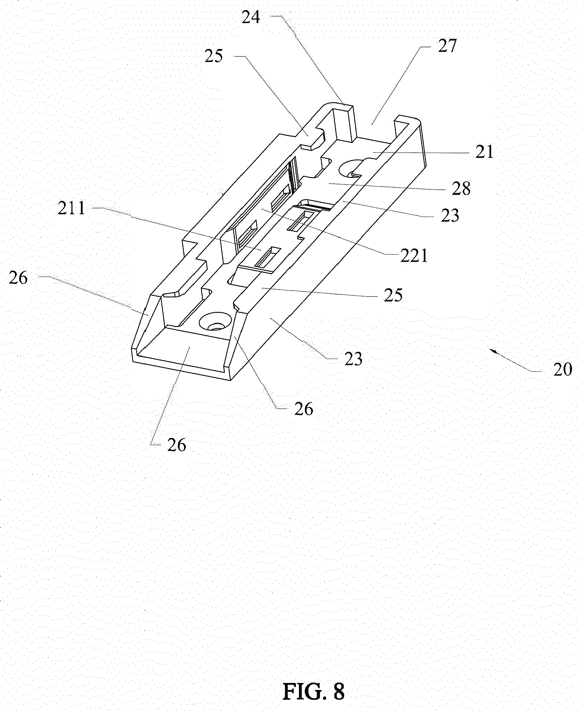

Referring to Fig. 8, the card holder 20 has an accommodating groove 28. Specifically, the card holder 20 comprises a bottom wall 21, a back wall 24, a left wall 22 and a right wall 23. The accommodating groove 28 for the reagent card 50 is surrounded by the bottom wall 21, the back wall 24, the left wall 22 and the right wall 23. Furthermore, the accommodating groove 28 has a width greater than that of the reagent card 50 and a height greater than that of the reagent card 50. A limiting portion 25, which protrudes inward, is arranged on each of the left wall 22 and the right wall 23. When the reagent card 50 is inserted, the limiting portion 25 is used for fixing the top of the reagent card. A guide portion 26 is arranged at an end, away from the back wall 24, of each of the bottom wall 21, the left wall 22 and the right wall 23. A slope is provided at a front end of the bottom wall 21 to form the guide portion 26, and a chamfer is provided at a front end of each of the left wall 22 and the right wall 23 to form the guide portion 26. A first elastic member 221 is arranged on an inner side of the left wall 22 and an inner side of the right wall 23, and a second elastic member 211 is arranged on the top of the bottom wall 21. Both the first elastic member 221 and the second elastic member 211 are elastic strips fixed on the card holder 20. By the limiting portion 25, the first elastic member 221 and the second elastic member 211 form a pre-compression force on the reagent card 50, preventing the shake of the reagent card 50 during the movement of the card holder 20.

When the reagent card 50 is inserted, the driving mechanism 17 drives the card holder 20 to move backward, so that the sample to be detected on the reagent card 50 is located below the detection portion of the optical module 60. The optical module 60 is used for fluorescence detection. Specifically, the optical module 60 comprises an excitation light source component 601, a color filter component 602, a fluorescence receiving component 603, a signal receiving plate 604 and an optical box control board 605. The signal receiving plate 604 is electrically plugged in the optical box control board 605 to be electrically connected to the control system 18.

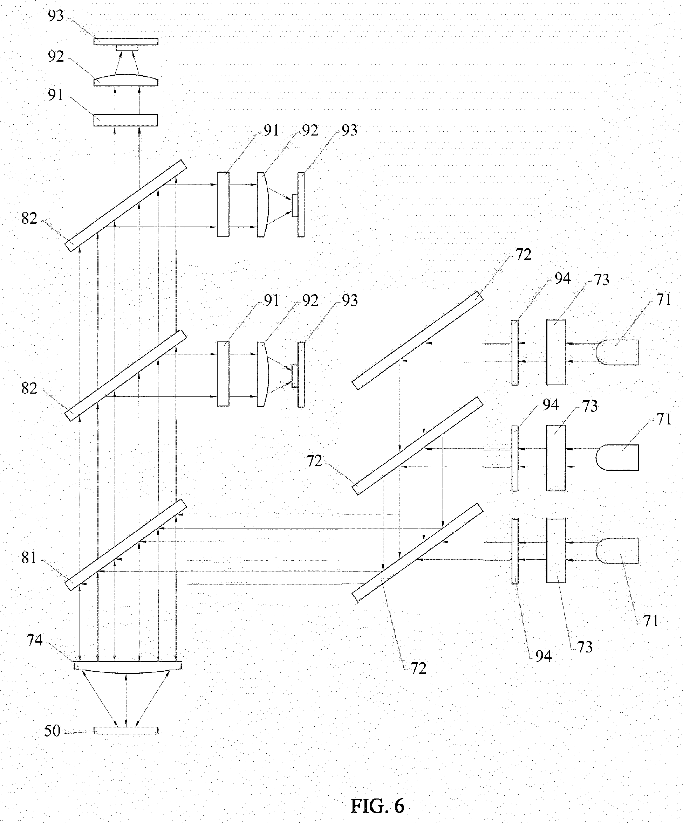

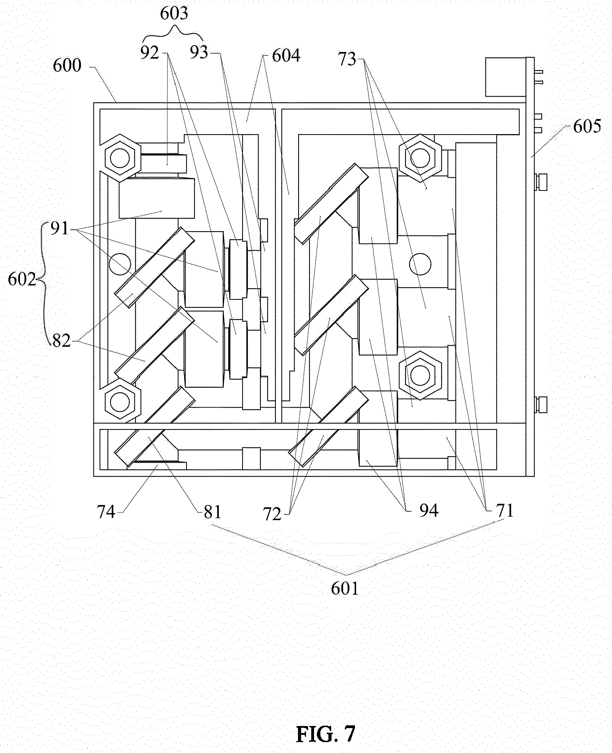

Referring Fig. 6 and Fig. 7, the optical module 60 is mounted in the optical box 600 which is fixed on the mounting plate 19 via a fixation seat 6000. Furthermore, the optical module 60 is suspended over the mounting plate to form a channel for the card holder 20 to pass. The excitation light source component 601 has multiple excitation light channels. Specifically, the excitation light source component 601 comprises a first dichroic mirror 81 and a light source 71 configured to generate irradiation light. The light source 71 is electrically connected to the optical box control board 605. The first dichroic mirror 81 is arranged at an irradiation light path of the light source 71. The excitation light source component 601 further comprises fourth dichroic mirrors 72 configured to combine irradiation light from the light source 71. The fourth dichroic mirrors 72 are arranged between the respective light source 71 and the first dichroic mirror 81. In this embodiment, as shown in Fig. 6, there are total three light sources 71. The light sources 71 are LEDs or lasers. Further, a collimation lens 73 and a first optical filter 94 are arranged between the fourth dichroic mirrors 72 and the light sources 71. As shown in Fig. 6, the irradiation lights emitted by the light sources 71 are transmitted sequentially through the collimation lens 73 and the first optical filter 94, then reflected by the forth dichroic mirror 72 to a corresponding surface of the forth dichroic mirror 72 on the bottom and reflected to the first dichroic mirror 81. The irradiation light emitted by the light source 71 on the bottom directly irradiates the first dichroic mirror 81 through the collimation lens 73 and the first optical filter 94. The fourth dichroic mirrors 72 in this embodiment are plane mirrors, with their both surfaces coated with a film. The irradiation lights emitted by the three light sources 71 differ from each other in wavelength. Those skilled in the art can control the range of the irradiation light wavelength by selecting an appropriate film to generate excitation channels of the light source with different wavelengths. In addition, the excitation light source component 601 further comprises a first convex lens 74 arranged at a reflection light path of the first dichroic mirror 81. The irradiation lights of different wave lengths irradiate the sample to be detected on the cardholder 50 through the first convex lens 74 to generate multiple fluorescence signals of different wavelengths. In this embodiment, three fluorescence signals of different wavelengths are directed to the first dichroic mirror 81 through the first convex lens 74, and then transmitted through the first dichroic mirror 81.

The color filter component 602 is configured to form multiple fluorescence transmission paths. Specifically, the color filter component 602 is arranged at a transmission light path of the first dichroic mirror 81. The color filter component 602 comprises at least one second dichroic mirror 82 configured to receive fluorescence signals. When there are three or more light sources for exciting the sample to be detected to generate fluorescence signals, it may be considered that the sample to be detected generates three or more fluorescence signals of different wavelengths. In this case, there should be two or more second dichroic mirrors 82, which are sequentially arranged, with the second dichroic mirror 82 close to the first dichroic mirror 81 being arranged at a transmission light path of the first dichroic mirror 81 and the later second dichroic mirror 82 being arranged at a transmission light path of the previous second dichroic mirror 82.Referring to Fig. 6, in this embodiment, there are three light sources 7. That is, the sample to be detected generates three or more fluorescence signals of different wavelengths. In this case, two second dichroic mirrors 82 are used. As shown in Fig. 6, the two second dichroic mirrors 82 are different in both the reflection light wavelength and the transmission light wavelength, and the later second dichroic mirror 82 is arranged at a transmission light path of the previous second dichroic mirror 82 and the first second dichroic mirror 82 is arranged at a transmission light path of the first dichroic mirror 81. For a person of ordinary skill in the art, the model of the second dichroic mirrors can be selected according to the fluorescence wavelength. The specific model will not be described here. In this embodiment, one fluorescence signal is reflected by the first second dichroic mirror 82 to form a fluorescence transmission path, another fluorescence signal is transmitted by the first second dichroic mirror 82 and then reflected by the second dichroic mirror 82 to form another fluorescence transmission path, and the other fluorescence signal is transmitted by the first second dichroic mirror 82 and then transmitted by the second dichroic mirror 82 to form a third fluorescence transmission path.

The fluorescence receiving component 603 has multiple fluorescence receiving channels. Specifically, the fluorescence receiving component 603 comprises multiple optical elements 93. The optical elements 93 are photomultiplier tubes or photodiodes. The optical elements 93 are arranged at a reflection light path and/or a transmission light path of the second dichroic mirror 82. The optical elements 93 are arranged on the signal receiving plate 604. The fluorescence receiving component 603 further comprises a plurality of second optical filters 91 and second convex lenses 92, which are configured to collect fluorescence signals on a corresponding one of the optical elements 93. The second optical filters 91 and the second convex lenses 92 are arranged between the optical elements 93 and the second dichroic mirrors 82. In this embodiment, three fluorescence signals of different wavelengths pass through the second optical filters 91 and the second convex lenses 92 respectively by three fluorescence transmission paths, and then, are collected on the optical elements 93 and then converted into electrical signals. In this embodiment, each optical element 93 forms a fluorescence receiving channel together with the second optical filters 91 and the second convex lenses 92.

In Fig. 6, three irradiation lights of different wavelengths are shown, as an example, to excite the sample to be detected to generate three fluorescence signals of different wavelengths. It is possible for a person or ordinary skill in the art to optimize the fourth dichroic mirrors 72 to increase multiple irradiation lights of different wavelengths, in order to excite multiple fluorescence signals of different wavelengths. For example, if two irradiation lights of different wavelengths are both on a path of irradiation light on a surface of the fourth dichroic mirrors 72, a path of reflection light may be formed as long as the wavelength of the two irradiation lights is within its reflection light wavelength range. Or, if two irradiation lights of different wavelengths are both on a path of irradiation light on a surface of the fourth dichroic mirrors 72, a path of transmission light may be formed as long as the wavelength of the two irradiation lights is within its transmission light wavelength range. Of course, the shape of the fourth dichroic mirrors 72 may be changed, so that the irradiation lights are combined to parallel irradiation light that is directed to the collimation lens. Of course, the second dichroic mirror 82 and the optical element 93 should be accordingly supplemented as the number of wavelengths of fluorescence signals increases. Furthermore, the model of the second dichroic mirrors 82 should be selected according to the fluorescence wavelength. In the present invention, the irradiation lights of multiple wavelengths can be emitted simultaneously or at intervals to the sample to be detected, to excite fluorescence of different wavelengths for detection. It is unnecessary to replace the optical filter set and also unnecessary to repeatedly move the sample to be detected. The application enables the instantaneous detection of fluorescence signals of multiple wavelengths, thereby improving the efficiency and reliability of the detection.

At the end of detection, it is needed to withdraw the reagent card 50. The instantaneous multi-wavelength fluorescence detection instrument in the present invention further comprises a card dropping mechanism 80. Specifically, the card dropping mechanism comprises a card retaining plate 40 and a card slide plate 45. A notch 27 is formed on the back wall 24. The card retaining plate 40 comprises a fixation portion 41, a connection portion 42 and a card retaining portion 43 matched with the notch 27. A cut-through space 44 through which the card holder 20 goes is arranged between the fixation portion 41 and the card retaining portion 43. The driving mechanism 17 drives the card holder 20 to move backward. When the back end of the card holder 20 moves to the card retaining portion 43, a lower portion of the card retaining portion 43 is located at the notch 27 and resisted against the reagent card 50. When the card holder 20 continues moving backward, the card retaining portion 43 retains the reagent card 50, so that the reagent card 50 will not move together with the card holder 20. When the reagent card 50 is completely separated from the card holder 20, the reagent card slips off the card slide plate 45. In addition, a gate 16 corresponding to the card slide plate 45 is mounted on the bottom shell 11. The gate 16 is mounted on the bottom shell 11 in a hinged manner. A clamping portion, configured to press the side wall of the gate 16, is provided on the bottom shell 11, to ensure the firm closing of the gate 16.

The control system 18 of the present invention receives signals from the optical elements 93. The control system 18 performs calculation according to signals from the optical elements 93, and prints and displays the result of calculation.

The instantaneous multi-wavelength fluorescence detection instrument of the present invention further comprises a scanner 70. The scanner 70 is fixedly mounted on the mounting plate 19 via a mounting seat 701. The scanner 70 comprises a one-dimensional scanning gun 702. The scanner 70 is electrically connected to the control system 18.

In the present invention, at an end of the mounting plate 19 located at the driven wheel 1722, there is a trough-type photoelectric plate 103 which is electrically connected to the control system 18 and configured to detect the original position of the driving motor 33.

In the present invention, at an end of the mounting plate 19 located at the driving motor 33, there is a micro switch 101 which is electrically connected to the control system 18 and configured to detect the position of the tail of the driving motor 33.

In the present invention, on the mounting plate 19 above the original position of the card holder 20, there is a photoelectric fed-card detection plate 102 which is electrically connected to the control system 18 and configured to detect the presence or absence of the reagent card 50.

When the card holder 20 is in the original position, the reagent card 50 is inserted into the card holder 20. Upon sensing the reagent card, the photoelectric fed-card detection plate 102 feeds information to the control system 18. The control system 18 controls the driving motor 33 to operate. By the driving mechanism 17, the card holder 20 is moved to a position below the optical box 600, with the reagent card 50 being located right below the first convex lens 74. The control system 18 controls the light source 71 in the optical module 60 to emit fluorescence signals of different wavelengths, which irradiate the reagent card 50 through the light source excitation module 601. The fluorescence signals are reflected by the reagent card 50 to form different fluorescence transmission paths through the color filter component 602. Then, the optical elements 93 in the fluorescence receiving component 603 receive different fluorescence signals, respectively. Information is transmitted to the control system 18 through the signal receiving plate 604 and the optical box control board 605. At the end of detection, the control system 18 controls the driving motor 33 to run. The card holder 20 continues moving forward up to the micro switch 101. Now, the reagent card 50 is brought by the card retaining plate 40 to the card slide plate 45. Then, the control system 18 controls the driving motor 33 to rotate reversely. By the driving mechanism 17, the card holder 20 is moved to the original position. At the same time, the control system 18 displays and/or detects the result.The present invention further provides an instantaneous multi-wavelength fluorescence detection method, which uses the instantaneous multi-wavelength fluorescence detection instrument as described above, comprising steps of:
SI: inserting, into a card holder 20, a carrier of a sample to be detected, and moving the sample to be detected to a detection position of an optical module 60 by a driving mechanism;
S2: emitting, by a light source 71, multiple irradiation lights of different wavelengths, which are reflected by a first dichroic mirror 81 to the sample to be detected to excite multiple fluorescence signals of different wavelengths;
S3: reflecting and/or transmitting the fluorescence signals by at least one second dichroic mirror 82, in order to split the fluorescence signals of different wavelengths; and
S4: receiving the split fluorescence signals by optical elements 93, respectively.

The embodiments of the invention are described in detail above with reference to the accompanying drawings, and are not intended to limit the invention. Various modifications made by those skilled in the art without departing from the spirit of the invention should still fall within the scope of the invention.

## Claims

1. An instantaneous multi-wavelength fluorescence detection instrument, comprising:
a card holder (20) having an accommodating groove;
a driving mechanism (17) configured to drive the card holder (20) to move; and
an optical module (60) for fluorescence detection, the optical module (60) comprising an excitation light source component (601) having at least one excitation light channel, a color filter component (602) configured to form multiple fluorescence transmission paths and a fluorescence receiving component (603) having multiple fluorescence receiving channels, wherein the excitation light source
component (601) comprises a first dichroic mirror (81) and a light source (71) configured to generate irradiation light, the first dichroic mirror (81) being arranged atan irradiation light path of the light source (71), the card holder (20) being movable onto a reflection light path of the first dichroic mirror (81) by the driving mechanism (17); the color filter component (602) is arranged at a transmission light path of the first dichroic mirror (81), and the color filter component (602) comprises at least one second dichroic mirror (82) configured to receive fluorescence signals; and the fluorescence receiving component (603) comprises multiple optical elements (93) each arranged at a reflection light path and/or a transmission light path of the second dichroic mirror (82).

2. The instantaneous multi-wavelength fluorescence detection instrument according to claim 1, wherein the driving mechanism (17) comprises a guide rail component (171), a slider (32) that can slide along the guide rail component, and a driving motor (33) connected to the slider (32) via a belt drive component (172); the belt drive component (172) comprises a driving wheel (1721) mounted on a driving shaft of the driving motor (33), a driven wheel (1722) arranged in opposite to the driving wheel (1721), and a drive belt (34) closely arranged on the driving wheel (1721) and the driven wheel (1722); the slider (32) is fixedly connected to the drive belt (34); and the card holder (20) is connected to the slider (32) via a slider connecting plate (35).

3. The instantaneous multi-wavelength fluorescence detection instrument according to claim 1, wherein the card holder (20) comprises a bottom wall (21), a back wall (24), a left wall (22) and a right wall (23); a limiting portion (25), which protrudes inward, is arranged at each of an upper edge of the left wall (22) and an upper edge of the right wall (23); a guide portion (26) is arranged on each of the bottom wall (21), the left wall (22) and the right wall (23); and, a first elastic member (221) is arranged on an inner side of the left wall (22) and/or an inner side of the right wall (23), and a second elastic member (211) is arranged on a top end surface of the bottom wall (21).

4. The instantaneous multi-wavelength fluorescence detection instrument according to claim 3, further comprising a card dropping mechanism (80); the card dropping mechanism (80) comprises a card retaining plate (40) and a card slide plate (45); a notch (27) is formed on the back wall (24); the card retaining plate (40) comprises a fixation portion (41), a connection portion (42) and a card retaining portion (43) matched with the notch (27); and a cut-through space (44) through which the card holder (20) goes is arranged between the fixation portion (41) and the card retaining portion (43).

5. The instantaneous multi-wavelength fluorescence detection instrument according to claim 1, wherein the excitation light source component further comprises fourth dichroic mirrors (72) configured to combine irradiation light from the light source (71); the fourth dichroic mirrors (72) arranged between the respective light source (71) and the first dichroic mirror (81); a collimation lens (73) and a first optical filter (94) are arranged between the fourth dichroic mirrors (72) and the light source (71); and the excitation light source component (601) further comprises a first convex lens (74) arranged at a reflection light path of the first dichroic mirror (81).

6. The instantaneous multi-wavelength fluorescence detection instrument according to claim 1, wherein there are at least two second dichroic mirrors (82), which are sequentially arranged, with the second dichroic mirror (82) close to the first dichroic mirror (81) being arranged at a transmission light path of the first dichroic mirror (81) and the later second dichroic mirror (82) being arranged at a transmission light path of the previous second dichroic mirror (82).

7. The instantaneous multi-wavelength fluorescence detection instrument according to claim 1, wherein the fluorescence receiving component (603) further comprises a plurality of second optical filters (91) and second convex lenses (92), which are configured to collect fluorescence signals on a corresponding one of the optical elements (93); and the second optical filters (91) and the second convex lenses (92) are arranged between the optical elements (93) and a corresponding one of the second dichroic mirrors (82).

8. The instantaneous multi-wavelength fluorescence detection instrument according to claim 1, further comprising a control system (18) configured to receive a signal from each of the optical elements (93), the control system (18) being connected with a thermal transfer printer (13) and a display screen (14).

9. An instantaneous multi-wavelength fluorescence detection method, which uses the instantaneous multi-wavelength fluorescence detection instrument as described in any one of claims 1 to 8, comprising steps of:
S1: inserting, into a card holder (20), a carrier of a sample to be detected, and moving the sample to be detected to a detection position of an optical module (60) by a driving mechanism;
S2: emitting, by a light source (71), multiple irradiation lights of different wavelengths, which are reflected by a first dichroic mirror (81) to the sample to be detected to excite multiple fluorescence signals of different wavelengths;
S3: reflecting and/or transmitting the fluorescence signals by at least one second dichroic mirror (82), in order to split the fluorescence signals of different wavelengths; and
S4: receiving the split fluorescence signals by optical elements (93), respectively.
